(19) Europäisches Patentamt
European Patent Office
Office européen des brevets

(11) EP 0 579 193 B1

(12) # EUROPÄISCHE PATENTSCHRIFT

(45) Veröffentlichungstag und Bekanntmachung des Hinweises auf die Patenterteilung:
**13.01.1999 Patentblatt 1999/02**

(21) Anmeldenummer: **93111250.2**

(22) Anmeldetag: **14.07.1993**

(51) Int Cl.[6]: **C08G 18/80**, C08G 18/63, C09D 161/20, B05D 7/26 // C08F283/02,(C09D161/20, 175:04, 201:04), (C09D161/20, 175:04, 151:08)

(54) **Wässriges, hitzehärtbares Überzugsmittel, dessen Herstellung und Verwendung**

Aqueous heat curable coating composition, its preparation and use

Composition de revêtement aqueuse thermodurcissable, sa préparation et utilisation

(84) Benannte Vertragsstaaten:
**AT BE DE ES FR GB IT NL PT SE**

(30) Priorität: **15.07.1992 DE 4223182**
**15.07.1992 DE 4223183**

(43) Veröffentlichungstag der Anmeldung:
**19.01.1994 Patentblatt 1994/03**

(73) Patentinhaber: **Herberts Gesellschaft mit beschränkter Haftung**
**42285 Wuppertal (DE)**

(72) Erfinder:
- **Bederke, Klaus, Dr.**
**D-45549 Sprockhövel (DE)**
- **Dücoffre, Volker**
**D-42119 Wuppertal (DE)**
- **Gräf, Knut**
**D-45525 Hattingen (DE)**
- **Schubert, Walter, Dr.**
**D-42349 Wuppertal (DE)**

(74) Vertreter: **Türk, Gille, Hrabal**
**Brucknerstrasse 20**
**40593 Düsseldorf (DE)**

(56) Entgegenhaltungen:
**DE-C- 4 142 816** **GB-A- 2 254 328**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 579 193 B1

Printed by Jouve, 75001 PARIS (FR)

## Beschreibung

Die Erfindung betrifft ein wäßriges hitzehärtbares Überzugsmittel auf der Basis filmbildender Copolymerer und/ oder Cokondensate, im Gemisch mit Aminharz und verkapptem Polyisocyanat, das Neutralisationsmittel, übliche Lackzusatzstoffe, Pigmente, Füllstoffe und/oder organische Lösemittel enthalten kann. Das wäßrige Überzugsmittel ist für die Herstellung von Lackierungen, insbesondere für Mehrschichtlackierungen als Basislack, bevorzugt als Klarlack verwendbar.

Der Aufbau von Mehrschichtlackierungen ist insbesondere auf dem Sektor des Kraftfahrzeugbaus bekannt. Dabei ist es günstig, auf eine Basislackschicht nach kurzer Antrocknungszeit "naß-in-naß" eine Klarlackschicht aufzubringen, worauf dann ein gemeinsames Einbrennen erfolgt.

Wäßrige Basislacke werden in der Literatur beschrieben und in der Praxis eingesetzt. Überzüge aus derartigen Basislacken werden in der Praxis jedoch noch mit nicht-wäßrigen Klarlacküberzügen versehen. In der DE-PS 28 06 497 wird zwar eine Mehrschichtlackierung mit einem Klarlacküberzug als Deckschicht beschrieben, wobei dieser Klarlack auch wasserverdünnbar sein soll; Beispiele für derartige wasserverdünnbare Klarlacke werden jedoch nicht angegeben. Als Basislack-Überzugsmittel werden Polyester mit hohem Molekulargewicht und hoher Viskosität, gelöst in Xylol, verwendet, die mit Acrylatharzen vermischt werden können. Derartige Lacke haben einen hohen Bedarf an Neutralisationsmittel und ergeben bei der Anwendung eine hohe Lösemittelemission.

Die DE-OS 37 12 442 beschreibt eine Mischung aus Polyester-Melaminharzaddukt mit Acrylharzen. Auch hier sind hohe Mengen an Neutralisationsmittel nötig.

Die DE-OS 36 32 617 beschreibt wäßrige Beschichtungsmassen auf der Basis von hochviskosen Harzen, beispielsweise Polyesterharze, in denen Harzpartikel, bei denen es sich um Acrylharze handeln kann, dispergiert sind. Die erhaltenen Massen sind instabil und unterliegen einer raschen Phasentrennung.

In der EP-A 02 06 072 werden Filmbildner auf der Basis von Acryl-Polymerprodukten beschrieben, die in einem Verdünnungsmittel mit einem Molekulargewicht über 200 hergestellt wurden, bei dem es sich unter anderem um einen Polyester handeln kann. Diese Filmbildner können jedoch nicht in wäßrigen Systemen eingesetzt werden.

In der DE-A 39 10 829 wird ein wäßriges Überzugsmittel beschrieben, das ein nach Neutralisation mit Basen wasserlösliches Polyesteroligomer-Polyacrylat und einen Aminharzvernetzer enthält. Dieses System liefert Klarlacke mit hohem Glanz und guter Härte.

In der DE-OS 35 37 855 wird die Verwendung von sauren Polykondensaten auf der Basis von Acrylharzen und Polyetherpolyolen beschrieben, die nach ihrer Neutralisation als wasserverdünnbare Bindemittel zur Herstellung von wasserverdünnbaren Einbrennfüllern, Decklacken oder Klarlacken eingesetzt werden können. Die hier eingesetzten Polyetherpolyole verlieren auch nach dem Einbrennen nicht ihre hohe Hydrophilie, so daß Feuchtraum- und Schwefelsäurebeständigkeit dieser Systeme unzureichend sind. Auch in der EP-A-0 365 775 wird die Verwendung saurer Polyacrylate beschrieben, die nach ihrer Neutralisation und Verdünnung zur Herstellung wasserverdünnbarer Decklacke dienen. Hier wird das Vernetzungsmittel Melaminharz aber nicht sogleich mit einemulgiert, sondern separat zugegeben, so daß keine hydrophoben Melaminharze eingesetzt werden können. Die zusätzliche Verwendung von Oligomeren wird nicht erwähnt, ebenso nicht die Vernetzung mit verkappten Polyisocyanaten. Außerdem weisen diese Überzugsmittel noch unbefriedigen High-Solid-Werte (HS-Werte) auf, d.h. sie benötigen einen hohen Gehalt an organischen Lösemitteln, in der Größenordnung von 27 g und mehr, bezogen auf 100 g Harzfestkörpergehalt (entsprechend einem HS-Wert von 73 und weniger).

Aufgabe der Erfindung ist die Bereitstellung von wäßrigen Überzugsmitteln die zu Überzügen mit hoher Chemikalienbeständigkeit, insbesondere hoher Beständigkeit gegen Säuren, wie Schwefelsäure und Ölruß führen. Insbesondere sollen die Überzugsmittel als Klarlacke geeignet sein.

Im Rahmen der Erfindung hat sich gezeigt, daß diese Aufgabe gelöst werden kann durch Bereitstellung von wäßrigen Überzugsmitteln, die neben filmbildenden Harzen eine Kombination von Aminharzen und Polyisocyanaten als Vernetzer enthält.

Einen Gegenstand der Erfindung bilden daher wäßrige Überzugsmittel enthaltend

A) 38,5 bis 80 Gew.-% eines oder mehrerer filmbildender selbstemulgierender Copolymerer auf der Basis von Estern ungesättigter Carbonsäuren mit hydrophoben und hydrophilen Anteilen, in teilweise oder vollständig mit Basen neutralisierter Form, wobei

a) die hydrophoben Anteile auf sekundäre OH-Gruppen enthaltenden monomeren Estern ungesättigter Carbonsäuren basieren, die im Gemisch mit OH-Gruppen-freien Comonomeren vorliegen können, und

b) die hydrophilen Anteile auf monomeren Estern ungesättigter Carbonsäuren mit primären OH-Gruppen und monomeren Estern ungesättigter Carbonsäuren mit COOH-Gruppen basieren, die im Gemisch mit OH-Gruppen-freien Comonomeren vorliegen können,

wobei das Zahlenverhältnis von primären zu sekundären OH-Gruppen im Copolymeren 1 : 1,5 bis 1 : 2,5 beträgt, und das Copolymer eine Säurezahl von 15 bis 60, eine OH-Zahl von 60 bis 200 und ein Zahlenmittel der Molmasse (Mn) von 2000 bis 10000 aufweist,

B) 0 bis 25,5 Gew.-% eines oder mehrerer Polyesteroligomerer mit einem errechneten Molekulargewicht von 200 bis 1000, einer Hydroxylzahl von 280 bis 600 und einer Säurezahl von 0 bis 1,5,

C) 3,5 bis 40 Gew.-% eines oder mehrerer Aminharzvernetzer,

D) 0,5 bis 28 Gew.-% eines oder mehrerer verkappter Polyisocyanate,

wobei sich die Gewichtsprozente der Komponenten A) bis D) jeweils auf die Festkörpergewichte der Harze beziehen und auf 100 Gew.-% addieren,
sowie Wasser und gegebenenfalls ein oder mehrere organische Lösemittel, Pigmente, Füllstoffe und/oder lackübliche Hilfs- und Zusatzstoffe.

Gemäß einer bevorzugten Ausführungsform der Erfindung enthalten die wäßrigen Überzugsmittel

A) 38,5 bis 80 Gew.-%, bevorzugt 45 bis 70 Gew.-% eines oder mehrerer der vorstehend beschriebenen selbstemulgierenden Polymeren auf der Basis von Estern ungesättigter Carbonsäuren mit hydrophoben und hydrophilen Anteilen, neben

B) 3,5 bis 25,5 Gew.-%, bevorzugt 5 bis 15 Gew.-%, eines oder mehrerer Polyesteroligomerer mit einem errechneten Molekulargewicht von 200 bis 1000, einer Hydroxylzahl von 280 bis 600 und einer Säurezahl von 0 bis 1,5.

C1)3,5 bis 28 Gew.-%, bevorzugt 10 bis 20 Gew.-%, eines oder mehrerer in Wasser unlöslicher Aminharzvernetzer,

C2)0 bis 4 Gew.-% eines oder mehrerer in Wasser löslicher Aminharzvernetzer und

D) 0,5 bis 28 Gew.-%, bevorzugt 10 bis 25 Gew.-%, eines oder mehrerer verkappter Polyisocyanate,

wobei sich die Gewichtsprozente der Komponenten A) bis D) jeweils auf das Festkörpergewicht der Harze beziehen und auf 100 Gew.-% addieren,
sowie Wasser und gegebenenfalls ein oder mehrere organische Lösemittel, Pigmente, Füllstoffe und/oder lackübliche Hilfs- und Zusatzstoffe.

Der hydrophobe Anteil a) der vorstehend definierten Ausführungsform der Komponenten A) der erfindungsgemäßen Überzugsmittel wird durch Copolymerisation von Estern ungesättigter Carbonsäuren mit einer Alkoholkomponente, die noch mindestens eine sekundäre Hydroxylgruppe enthält, erhalten. Beispiele für die ungesättigte Carbonsäure der ungesättigten Estermonomeren sind (Meth)acrylsäure (unter (Meth)acryl bzw. (meth)acryl wird hier und im Folgenden Methacryl und/oder Acryl bzw. methacryl und/oder acryl verstanden), Maleinsäure und Crotonsäure. Die Alkoholkomponente der Estermonomeren auf der Basis ungesättigter Carbonsäuren enthält bevorzugt 3 bis 25 Kohlenstoffatome. Sie kann auf kurzkettigen aliphatischen Alkoholen, langkettigen aliphatischen Alkoholen sowie auf Kondensationsprodukten von Alkoholen oder Glycidylverbindungen mit Fettsäuren basieren.

Die selbstemulgierenden Copolymeren der vorstehend beschriebenen Ausführungsform der Komponente A) werden im Folgenden zur Vereinfachung auch als Acrylcopolymere bezeichnet. Sie basieren jedoch nur bevorzugt auf Monomeren auf der Basis von Estern der (Meth)acrylsäure; der vereinfachte Ausdruck schließt die Ester anderer, ungesättigter Carbonsäuren, wie vorstehend definiert, ein.

Beispiele für die hydrophoben Monomeren mit sekundären OH-Funktionen sind:
Hydroxypropyl(meth)acrylat, Addukte aus Glycidyl(meth)acrylat und gesättigte kurzkettige Fettsäuren mit $C_1$ - $C_3$ Alkylresten, z.B. Essigsäure oder Propionsäure, sowie Addukte aus Cardura E (Glycidylester der Versaticsäure) mit ungesättigten COOH-funktionellen Verbindungen wie z.B. Acryl- bzw. Methacrylsäure, Maleinsäure, Crotonsäure, Addukte aus Cardura E mit ungesättigten Anhydriden wie z.B. Maleinsäureanhydrid, Umsetzungsprodukte aus Glycidyl (meth)acrylat mit gesättigten verzweigten oder unverzweigten Fettsäuren mit $C_4$ - $C_{20}$-Alkylresten, z.B. Butansäure, Capronsäure, Laurinsäure, Palmitinsäure, Stearinsäure, Arachidonsäure.

Der hydrophile Anteile b) dieser Ausführungsform der Komponente A) wird aus Monomeren auf der Basis von Estern ungesättigter Carbonsäuren, wie (Meth)acrylsäure, Maleinsäure und Crotonsäure mit mindestens einer primären OH-Gruppe im Alkoholteil hergestellt. Die Alkoholkomponente der ungesättigten Estermonomeren kann beispielsweise 2 bis 18 Kohlenstoffatome aufweisen.

Beispiele für die Monomeren zum Aufbau des hydrophilen Anteils der Komponente A) sind:

Hydroxyalkylester der Acrylsäure und/oder Methacrylsäure mit einer primären OH-Gruppe und einem $C_2$ - $C_3$-Hydroxyalkylrest wie Hydroxyethyl(meth)acrylat, sowie Hydroxyalkylester der Acrylsäure und/oder Methacrylsäure mit einer primären OH-Gruppe und einem $C_7$ - $C_{18}$-Hydroxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)acrylat mit Caprolacton.

Die hydrophilen Anteile dieser Ausführungsform der Komponente A) enthalten auch Carboxylgruppen, zu deren Einführung bei der Herstellung der Komponente A) carboxylfunktionalisierte Monomere mitverwendet werden, wie z. B. Acrylsäure, Methacrylsäure und Crotonsäure. Weitere verwendbare carboxylfunktionalisierte Monomere sind ungesättigte Anhydride wie Maleinsäureanhydrid, sowie Halbester von Maleinsäureanhydrid durch Anlagerung von gesättigten aliphatischen Alkoholen wie z.B. Ethanol, Propanol, Butanol und/oder Isobutanol.

Bei der Herstellung dieser Ausführungsform der Komponente A) können weitere Comonomere mitverwendet werden, die frei von OH-Gruppen sind.

Beispiele hierfür sind langkettige, verzweigte oder unverzweigte ungesättigte Monomere, wie Alkyl(meth)acrylate mit $C_8$ - $C_{18}$-Ketten im Alkylteil, z.B. Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat-1214, Isobornyl(meth)acrylat, 4-Tertiärbutylcyclohexylmethacrylat. Weitere Beispiele sind kurz- und mittelkettige, verzweigte oder unverzweigte ungesättigte Monomere, wie Alkyl(meth)acrylate mit $C_1$ - $C_7$-Ketten im Alkylteil, z.B. Methyl(meth) acrylat, Ethyl(meth)acrylat, Propylacrylat, Butyl(meth)acrylat, Isobutyl(meth)acrylat, Tertiärbutyl(meth)acrylat, Pentyl (meth)acrylat, Hexyl(meth)acrylat, Cyclohexyl(meth)acrylat. Es können auch aromatische Vinylverbindungen, wie Styrol und Styrolderivate, wie Vinyltoluol und p-Methylstyrol als Comonomere mitverwendet werden.

Die Herstellung der Copolymeren dieser Ausführungsform der Komponente A) erfolgt durch radikalische Copolymerisation. Die Monomermenge wird dabei so abgestimmt, daß die gewünschten Spezifikationen bezüglich Molmasse, OH-Gruppen-Verhältnis, OH-Zahl und Säurezahl erzielt werden.

Die Herstellung erfolgt beispielsweise als radikalische Lösungspolymerisation in Anwesenheit eines Radikalinitiators, wie sie dem Fachmann bekannt ist. Beispiele für Radikalinitiatoren sind Dialkylperoxide, wie Di-tert.-Butylperoxid, Di-cumylperoxid; Diacylperoxide, wie Di-benzoylperoxid, Dilaurouylperoxid; Hydroperoxide, wie Cumolhydroperoxid, tert.-Butylhydroperoxid; Perester, wie tert.-Butylperbenzoat, tert.-Butylperpivalat, tert.-Butyl-per-3,4,5-trimethylhexanoat, tert.-butyl-per-2-ethylhexanoat; Peroxiddicarbonate, wie Di-2-ethylhexyl-peroxydicarbonat, Dicyclohexylperoxydicarbonat; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid und Azo-Verbindungen, wie 2,2'-Azo-bis (2,4-dimethyl-valeronitril), 2,2'-Azo-bis(2-methylbutyronitril), 1,1'-Azo-bis-cyclohexancarbonitril, Azo-bis-isobutyro-nitril.

Die Polymerisationsinitiatoren werden im allgemeinen beispielsweise in einer Menge von 0,1 bis 4 Gew.-%, bezogen auf die Monomeren-Einwaage, zugesetzt.

Die radikalische Polymerisation kann im Eintopfverfahren unter Erzielung einer statischen Verteilung von hydrophoben und hydrophilen Anteilen durchgeführt werden.

Es kann z.B. so gearbeitet werden, daß alle notwendigen Monomeren sowie der oder die Initiatoren in einem Vorratsgefäß gemischt werden; anschließend wird über einen Zeitraum von z.B. 5 Stunden in ein z.B. 140°C heißes Lösemittel bzw. Lösemittelgemisch unter Rühren zudosiert. Die hierbei entstehenden Copolymeren besitzen dann eine statische Verteilung der primären und sekundären Hydroxy- sowie Carboxyfunktionen.

Es ist jedoch auch möglich, eine Blockpolymerisation zur Erzielung von Copolymerisaten mit hydrophoben und hydrophilen Blöcken durchzuführen. Zur Herstellung der Blockcopolymerisate kann in üblicher Arbeitsweise vorgegangen werden. Es können beispielsweise zunächst Gemische aus hydrophoben Monomeren (gegebenenfalls zusammen mit weiteren Comonomeren) polymerisiert werden, worauf dann hydrophile Monomere (gegebenenfalls mit Comonomeren) zudosiert und weiter polymerisiert werden. In der Praxis ist es beispielsweise möglich, zuerst ein Gemisch aus hydrophoben, hydroxyfunktionellen Monomeren, (Meth)acrylsäureestern sowie gegebenenfalls z.B. Vinylaromaten zuzudosieren und anschließend ein weiteres Gemisch aus hydrophilen, hydroxyfunktionellen Monomeren, (Meth)acrylsäureestern, Vinylaromaten und COOH-funktionellen Monomeren zuzudosieren. Die hierbei entstehenden Copolymeren besitzen dann ein hydrophobes und ein hydrophiles Kettenende, wodurch z.B. diesen Copolymeren ein Emulgatorcharakter zukommen kann.

Gemäß einer weiteren bevorzugten Variante dieser Ausführungsform der Erfindung können die Acrylcopolymeren der Komponente A) in Gegenwart der Polyesteroligomeren der Komponente B) hergestellt werden. Die Herstellung der Polyesteroligomeren ist z.B. bei der Herstellung der Polyesteroligomer-Polyacrylate beschrieben. Hierdurch kann die Menge der eingesetzten und später gegebenenfalls abzudestillierenden Lösemittel stark reduziert werden. Es ist dadurch auch möglich, Lösemittel völlig zu vermeiden und allein die Polyesteroligomeren als Lösemittel für die Herstellung der Komponente A) zu verwenden.

Gemäß einer weiteren bevorzugten Ausführungsform der Erfindung handelt es sich bei der Komponente A) somit um eines oder mehrere nach Neutralisation mit Basen wasserlösliche Polyesteroligomer-Polyacrylate, die erhältlich

sind durch radikalische Polymerisation von 80 bis 50 Gew.-%

c) mindestens eines hydroxyfunktionellen (Meth)acrylsäureesters und
d) mindestens einer monofunktionellen ethylenisch ungesättigten Säure und
e) gegebenenfalls eines oder mehrerer alpha,beta-ethylenisch ungesättigter Monomerer ohne Hydroxylgruppen und ohne Carboxylgruppen,

in 20 bis 50 Gew.-% eines oder mehrerer hydroxyfunktioneller Polyesteroligomerer, erhältlich durch Polykondensation von Diolen, Polyolen und Dicarbonsäuren und/oder deren Derivaten, mit einem errechneten Molekulargewicht von 200 bis 1000, vorzugsweise von 300 bis 600, einer Hydroxylzahl von 280 bis 600, bevorzugt 400 bis 500, und einer Säurezahl von 0 bis 1,5, wobei die Monomeren c), d) und e) in derartigen Mengen eingesetzt werden, daß das erhaltene Polyesteroligomer-Polyacrylat eine Hydroxylzahl von 150 bis 390 und eine Säurezahl von 16 bis 40, bevorzugt 20 bis 30, aufweist. Gew.-Teile und Gew.-% beziehen sich jeweils auf den Festkörpergehalt und addieren sich jeweils auf 100.

Die letztgenannte Ausführungsform der Bindemittelkomponente A) ist beispielsweise wie folgt herstellbar: Man legt 20 bis 50 Gew.-Teile (bezogen auf den Festkörper) mindestens eines hydroxyfunktionellen Polyesteroligomeren, erhältlich aus Diolen, Polyolen und Dicarbonsäuren mit einem errechneten Molekulargewicht von 200 bis 1000, bevorzugt 300 bis 600, einer OH-Zahl von 280 bis 600, bevorzugt 400 bis 500, einer Säurezahl von 0 bis 1,5 vor und polymerisiert darin 80 bis 50 Gew.-Teile (bezogen auf den Festkörper von c), d) und e)) von

c) mindestens eines hydroxyfunktionellen (Meth)acrylsäureester und

d) mindestens einer monofunktionellen alpha,beta-ethylenisch ungesättigten Carbonsäure und gegebenenfalls

e) einen oder mehreren alpha,beta-ungesättigten Monomeren ohne funktionelle Gruppen,

in Anwesenheit eines Radikalinitiators.

Das errechnete Molekulargewicht M des Polyesteroligomeren wird ermittelt nach T.C. Patton, Alkyd Resin Technology "Formulating Techniques and Allied Calculations", 1962, Seite 106 ff. wie folgt:

$$M = \frac{W}{(M_o - e_a) + \frac{W_{(AN)}}{56100}}$$

| | |
|---|---|
| M = | Mittleres Molekulargewicht |
| W = | Gewicht aller Komponenten abzüglich Kondensationswasser |
| $M_O$ = | Anzahl aller Mole |
| $e_a$ = | Äquivalente der Säure |
| $W_{(AN)}$ = | Säurezahl des Polyesteroligomeren |

Das Polyesteroligomere kann zur Herstellung des Polyesteroligomer-Polyacrylats ohne Lösemittel als alleiniges Reaktionsmedium eingesetzt werden.

Bei der Herstellung des Polyesteroligomeren-Polyacrylats kann aber auch ein mit Wasser verträgliches oder in Wasser lösliches Lösemittel für das Polyesteroligomere zugesetzt werden.

Geeignete Lösemittel sind bevorzugt solche, welche unbeschränkt mit Wasser mischbar sind. Z.B. einwertige aliphatische Alkohole, wie solche mit 2 bis 4 Kohlenstoffatomen, z.B. Ethanol und Isopropanol oder Ketone, z.B. Aceton oder Methylethylketon oder Glykolether, wie z.B. Methylglykol, Ethylglykol, Butoxyethanol, Methoxypropanol, Ethoxypropanol und Methoxypropoxypropanol oder Diole, wie z.B. Ethylenglykol und Propylenglykol oder Polyetherdiole, wie z.B. Polyethylglykol und Polypropylenglykol oder alle anderen mit Wasser unbeschränkt mischbaren Lösemittel anderer Verbindungsklassen bzw. Gemische der vorgenannten Verbindungen bzw. Verbindungsklassen. Anteilig können aber auch solche Lösemittel Verwendung finden, welche nur beschränkt oder gar nicht mit Wasser mischbar sind, und zwar in solchen Mengen, daß es nicht zu Trübungen der Harzlösungen bzw. der daraus hergestellten Lacke kommt. Die Lösemittel bzw. deren Gemische haben z.B. die Aufgabe, den Harzlösungen und den daraus hergestellten Wasserlackzusammensetzungen für die spätere Verarbeitung notwendige und vorgegebene Eigenschaften verleihen.

Das bei der Herstellung der Polyesteroligomer-Polyacrylat-Komponente als Reaktionsmedium verwendete Polyesteroligomere kann aus Polyolen, Dicarbonsäuren (und/oder deren Derivaten) und Diolen hergestellt werden. Die Polykondensation erfolgt nach üblichen, dem Fachmann geläufigen Verfahren, beispielsweise in Gegenwart von üblichen Veresterungskatalysatoren und bei erhöhten Temperaturen von z.B. 180 bis 230°C in der Schmelze.

Beispiele für das Polyol sind solche mit mehr als zwei OH-Gruppen, wie aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit.

Beispiele für Dicarbonsäuren sind aliphatische gesättigte und ungesättigte Dicarbonsäuren, wie z.B. Maleinsäure, Fumarsäure, Bernsteinsäure, Adipinsäure, Azelainsäure, Sebacinsäure; cycloaliphatische gesättigte und ungesättigte Dicarbonsäuren und aromatische Dicarbonsäuren, wie Phthalsäure, Isophthalsäure, Tetra-, Hexa-, Endomethylentetrahydrophthalsäure, Endoethylentetrahydrophthalsäure und Cyclohexandicarbonsäure (1.2, 1.3 und 1.4), Itaconsäure, Muconsäure und Camphersäure, oder gegebenenfalls deren mögliche Anhydride (als Derivate).

Beispiele für verwendbare Diole sind aliphatische Diole, wie z.B. Ethylenglykol, Propylenglykol (1,3 und 1,2), Butandiol, Hexandiol (1,6), Neopentylglykol; Polyetherglykole des Ethylens und Propylens mit bis zu 6 Monomerbausteinen, wie Diethylenglykol, Triethylenglykol, Tetraethylenglykol und Hexaethylenglykol; und cycloaliphatische Diole, wie 1,3-Dimethylolcyclohexan und 1,4-Dimethylolcyclohexan.

In dem Polyesteroligomeren oder dessen Lösung, z.B. in einem Monoalkohol, werden ein oder mehrere hydroxyfunktionelle (Meth)acrylester, eine oder mehrere monoethylenisch ungesättigte Säuren und/oder deren Derivate und gegebenenfalls ein oder mehrere alpha,beta-ethylenisch ungesättigte Monomere, die frei von OH-Gruppen und von gegebenenfalls neutralisierten COOH-Gruppen sind, einer radikalischen Polymerisation in Anwesenheit eines Radikalinitiators unterzogen. Beispiele für Radikalinitiatoren sind die gleichen wie sie vorstehend für die Herstellung der Komponente A) auf der Basis von Estern ungesättigter Carbonsäuren mit hydrophoben und hydrophilen Anteilen genannt wurden.

Auch hier werden die Polymerisationsinitiatoren beispielsweise zu einer Menge von 0,1 bis 4 Gew.-%, bezogen auf die Monomeren-Einwaage, zugesetzt.

Beispiele für die alpha,beta-ethylenisch ungesättigten Monomeren der Komponenten A)e) ohne OH-Gruppe und ohne gegebenenfalls neutralisierte COOH-Gruppe sind: (Meth)acrylsäureester von Alkoholen mit 1 bis 12 Kohlenstoffatomen in der Kette, wie z.B. Methyl-, Ethyl-, n-Propyl-, Isopropyl-, Butyl(n-, iso- und tert.-), Hexyl-, 2-Ethylhexyl- und Lauryl-Alkohol, sowie aromatische Vinylverbindungen, wie Styrol, Vinyltoluol und alpha-Methylstyrol.

Beispiele für die verwendbaren hydroxyfunktionellen (Meth)acrylester der Komponente A)c) sind (Meth)acrylester des Ethylenglykols, Propylenglykols (1,2 und 1,3), Butandiols (1,4), Hexandiols (1,6), sowie Polyethylenglykolmono (meth)acrylat mit 6 bis 8 Ethylenglykoleinheiten und n-Propylenglykolmono(meth)acrylat mit 5 bis 6 Propylenglykoleinheiten. Bevorzugte Beispiele sind Hydroxyethylacrylat-Caprolacton-Addukte, Butandiol(1,4)mono(meth)acrylat, Polypropylenglykolmono(meth)acrylat und Polyethylenglykolmono(meth)acrylat.

Die hydroxyfunktionellen (Meth)acrylester der Komponente A)c) können zum Teil durch Siloxan-funktionelle ethylenisch ungesättigte Monomere, z.B. (Meth)acrylester, ersetzt sein. Beispiele hierfür sind 3-Methacryloxypropyl-trimethoxysilan und Vinyltriethoxysilan.

Beispiele für alpha,beta-ethylenisch ungesättigte Carbonsäuren der Komponente A)d) sind Acrylsäure oder Methacrylsäure sowie Maleinsäure und Fumarsäure und deren Halbester mit aliphatischen Alkoholen, sowie Maleinsäureanhydrid.

Der in der vorliegenden Beschreibung und den Patentansprüchen verwendete Ausdruck (Meth)acryl bedeutet Acryl und/oder Methacryl.

Bei den in den erfindungsgemäßen Überzugsmitteln als Komponente B) gegebenenfalls eingesetzten Polyesteroligomeren kann es sich beispielsweise um die gleichen und in gleicher Weise hergestellten handeln, wie sie vorstehend zur Herstellung der Polyesteroligomer-Polyacrylate beschrieben wurden.

Bei den als Komponente C) in den erfindungsgemäßen Überzugsmitteln eingesetzten Aminharzen kann es sich um übliche Aminharzvernetzer handeln, wie sie auf dem Lacksektor eingesetzt werden.

Im allgemeinen handelt es sich solche Aminharzvernetzer bevorzugt, die wasserlöslich sind oder durch Zusatz von organischen Lösemitteln wasserlöslich gemacht werden können. Als Lösemittel können beispielsweise die vorstehend zur Herstellung der Polyesteroligomer-Polyacrylate beschriebenen, sowie zur Herstellung der Lacke verwendbare mit Wasser verträgliche bzw. wasserlösliche organische Lösemittel verwendet werden.

Bei den Aminharzen handelt es sich um dem Fachmann geläufige Produkte, die in der Literatur beschrieben werden und im Handel erhältlich sind. Die Herstellung erfolgt beispielsweise wie in Ullmanns Enzyklopädie der Technischen Chemie, Band 3, Seite 474 - 496, 1953 und in Houben-Weyl, Methoden der Organischen Chemie, Band 14/2, Seite 319 - 388, 1963, beschrieben durch Umsetzung von Aldehyden, insbesondere Formaldehyd mit mehreren Amino- oder Iminogruppen tragenden Verbindungen, wie z.B. Melamin, Harnstoff, Dicyandiamid und Benzoguanamin oder Gemischen derartiger Produkte. Die Aminharze sind üblicherweise mit 1 bis 6, bevorzugt 1 bis 4, Kohlenstoffatome aufweisenden aliphatischen Alkoholen ganz oder teilweise verethert, wobei Methanol, Ethanol und n- und iso-Butanol zur Veretherung besonders bevorzugt sind. In besonderem Maße sind geeignet hochiminofunktionelle Melaminformaldehydharze, wie z.B. die Handelsprodukte Cymel 323 und 325, partiell methylierte Melaminformaldehydharze, wie z.B. die Handelsprodukte Cymel 373, 385 oder hochmethylolierte Melaminformaldehydharze, wie z.B. die Handelsprodukte Cymel 300 und 301 (Cymel ist ein eingetragenes Warenzeichen). Derartige bevorzugte Melaminformaldehydharze enthalten vorzugsweise die folgenden funktionellen Gruppen:

Methoxymethylimino 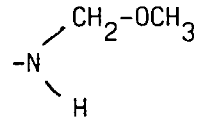

Methoxymethylmethylolamino 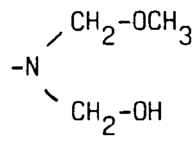

Di-(methoxymethyl)amino 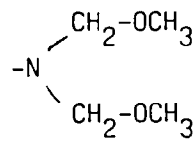

Diese methylveretherten Melaminharze sind meist sehr hydrophil und damit wasserlöslich.

Beispiele für in Wasser unlösliche Aminharzvernetzer der Komponente C) der erfindungsgemäßen Überzugsmittel sind in Wasser unlösliche butanol- oder isobutanolveretherte Melamine wie z.B. die Handelsprodukte Setamin US 138 oder Maprenal MF 610; mischveretherte Melamine, die sowohl butanol- als auch methanolverethert sind, wie z.B. Cymel 254, sowie Hexamethyloxymethylmelamin (HMM-Melamine) wie z.B. Cymel 301 oder Cymel 303, wobei letztere zur Vernetzung einen externen Säurekatalysator wie z.B. p-Toluolsulfonsäure benötigen können.

Durch Verwendung wasserlöslicher Lösemittel können die wasserunlöslichen Melaminharze wasserverträglich werden. Beispiele sind die zur Herstellung des Polyesteroligomer-Polyacrylats beschriebenen Lösemittel. Hochbutanolveretherte Melaminharze, die stark hydrophob sind und durch wasserlösliche Lösemittel mit Wasser verträglich gemacht werden können, sind insbesondere bei der Verwendung der Bindemittelemulsionen bevorzugt. Ein Beispiel hierfür ist Maprenal MF 3615.

Die in den erfindungsgemäßen Überzugsmitteln als zweite Vernetzerkomponente D) eingesetzten verkappten Polyisocyanate sind alle üblichen verkappten Polyisocyanatvernetzer, z.B. Diisocyanate, wie sie auf dem Lacksektor eingesetzt werden. Diese verkappten Polyisocyanate deblockieren bevorzugt bei Einbrenntemperaturen über 80°C z. B. über 120°C und setzen die Isocyanatgruppierungen frei.

Beispiele für solche Isocyanate sind z.B. 2,4-Toluylendiisocyanat; 2,6-Toluylendiisocyanat, 4,4-Diphenylmethandiisocyanat, Hexamethylendiisocyanat; 3,5,5-Trimethyl-1-isocyanat-3-isocyantmethylcyclohexan; m-Xylylendiisocyanat, p-Xylylendiisocyanat; Tetramethylxylylendiisocyanat, Tetramethyldiisocyanat, Isophorondiisocyanat oder Cyclohexan-1,4-diisocyanat, wobei die letzteren bevorzugt sind.

Diisocyanate können zu Präpolymeren mit höherer Molmasse verknüft sein.

Zu nennen sind hier beispielsweise Addukte aus Toluylendiisocyanat und Trimethylolpropan, ein aus 3 Molekülen Hexamethyldiisocyanat gebildetes Biuret, sowie die Trimeren des Hexamethylendiisocyanats und die Trimeren des Isophorondiisocyanats.

Die Isocyanatgruppierungen sind vollständig verkappt. Beispiele für diese Verkappungsmittel sind Malonsäuredimethylester, Malonsäurediethylester, Acetessigester, Caprolactam, Propandiol-1,2 und/oder Butanonoxim, wobei das zuletztgenannte Verkappungsmittel bevorzugt ist, sowie die weiteren dem Fachmann geläufigen Verkappungsmittel.

Zur Herstellung der erfindungsgemäßen Überzugsmittel werden lösliche Copolymere oder Cokondensate der Komponente A), wie z.B. die als Beispiele angegebenen Polyesteroligomer-Polyacrylate einer Neutralisation mit Basen unterzogen. Als Basen dienen insbesondere die auf dem Lacksektor üblichen Amine, wobei es sich bevorzugt um flüchtige organische niedermolekulare Amine oder um Ammoniak handelt. Die Neutralisation des Polyesteroligomer-Polyacrylats erfolgt gegebenenfalls unter Erwärmen zur Erzielung einer günstigen Arbeits-Viskosität oder nach Zusatz von wasserverträglichen bzw. wasserlöslichen organischen Lösemitteln. Die Base wird in einer derartigen Menge zugegeben, daß der pH-Wert des erzielten neutralisierten Produktes bei etwa 7,0 bis 10, bevorzugt 7,5 bis 9 liegt.

Die Neutralisation kann in Anwesenheit des Aminharzvernetzers, des verkappten Polyisocyanats sowie der weiteren Bestandteile des Überzugsmittels erfolgen. Aminharzvernetzer, verkapptes Polyisocyanat und Additive können jedoch auch nach der Neutralisation zu dem Polyesteroligomer-Polyacrylat gefügt werden. Das erhaltene neutralisierte Produkt wird bevorzugt nach Zusatz des Aminharzvernetzers, des verkappten Polyisocyanats und weiterer Additive sowie gegebenenfalls Lösemitteln mit Wasser in einer derartigen Menge versetzt, daß eine zur Lagerung und für den Transport geeignete Viskosität erhalten wird. Ein derartiges Konzentrat kann dann beispielsweise unmittelbar vor der Verwendung mit weiterem Wasser, gegebenenfalls zusammen mit weiteren Lösemitteln, auf die geeignete Anwendungs-Viskosität verdünnt werden. Die derart erhaltenen Überzugsmittel weisen im Anwendungszustand einen auf das Gesamtgewicht von Wasser, Lösemittel, Aminharz, verkapptem Polyisocyanat, Polyesteroligomer-Polyacrylat und weitere Additive, wie beispielsweise Pigmente und Füllstoffe etc. bezogenen Festkörpergehalt von beispielsweise bis zu 65 % auf. Bei Klarlacken, die keine Pigmente oder Füllstoffe enthalten, liegt dieser Festkörperanteil beispielsweise bis zu 50 Gew.-%.

Hierbei ergibt sich der Vorteil, daß bezogen auf den Gesamt-Lösemittelgehalt ein sehr hoher Festkörpergehalt erzielt wird.

Werden emulgierbare Copolymere oder Cokondensate eingesetzt, wie z.B. die vorstehend beschriebenen selbstemulgierbaren Copolymeren auf der Basis von Estern ungesättigter Carbonsäuren mit hydrophoben und hydrophilen Anteilen, so können zur Bereitung der wäßrigen Emulsionen übliche Verfahren angewendet werden, die dem Fachmann geläufig sind. So können die Komponenten A), B) und C) beispielsweise miteinander vermischt, neutralisiert und emulgiert werden. Es ist auch möglich, zunächst die Komponenten A), B) und D) zu vermischen, zu neutralisieren und anschließend mit den Vernetzerkomponenten C) zu vermischen, worauf in Wasser emulgiert wird.

In der Praxis kann beispielsweise so vorgegangen werden, daß ein lösemittelhaltiges Acrylcopolymer weitgehend von Lösemitteln befreit wird, bevorzugt durch Destillation unter vermindertem Druck, worauf in das noch warme Acrylcopolymer das lösemittelfreie Polyesteroligomer eingerührt wird, z.B. in einem Zeitraum von etwa 10 Minuten. Anschließend wird das Harz mit Basen teilweise oder ganz neutralisiert. Dies kann beispielsweise durch langsames Zulaufen, während beispielsweise über 5 Minuten, von Basen erfolgen. Dann können ein oder mehrere Melaminharze ebenfalls in das noch warme Harz/Polyesteroligomer-Gemisch eindosiert werden, was beispielsweise in einem Zeitraum von 5 bis 10 Minuten erfolgen kann.

Anschließend wird in das warme Harzgemisch vollentsalztes Wasser, z.B. in 60 bis 90 Minuten, eindosiert, beispielsweise unter intensivem Mischen. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern. Das Verfahren kann kontinuierlich oder diskontinuierlich geführt werden. Man erhält eine wäßrige Öl-in-Wasser-Emulsion, die lagerstabil ist und mit Wasser ohne Probleme auf geringere, zur Applikation geeignete Festkörpergehalte eingestellt werden kann. Additive, wie Pigmente, Füllstoffe und andere Zusätze können je nach Bedarf während der Herstellung der Emulsionen und/oder nach deren Herstellung zugesetzt werden.

Die erfindungsgemäß erhaltenen wäßrigen Emulsionen besitzen beispielsweise einen HS-Wert von 80 bis 90 und können beispielsweise einen Festkörperbereich von bis zu 65 Gew.-%, insbesondere von 25 bis 55 Gew.-%, bezogen auf die fertige Dispersion, aufweisen. Zur Applikation können sie gegebenenfalls mit Wasser, z.B. auf eine geeignete Spritzviskosität verdünnt werden.

Die erfindungsgemäßen Überzugsmittel können lackübliche Lösemittel in Mengen von beispielsweise 5 bis 20 Gew.-%, bezogen auf das fertige, applikationsbereite Überzugsmittel, enthalten. Beispiele für derartige Lösungen sind organische Lösemittel, wie aliphatische und aromatische Lösemittel, wie aliphatische und aromatische Kohlenwasserstoffe, beispielsweise Toluol, Xylole, Gemische aliphatischer und/oder aromatischer Kohlenwasserstoffe sowie Ester, Ether und Alkohole.

Die erfindungsgemäßen Überzugsmittel weisen den Vorteil auf, daß sie nur geringe Mengen von organischen Lösemitteln enthalten. Bei diesen geringen Mengen handelt es sich bevorzugt um die für die Herstellung des Polyesteroligomer-Polyacrylats verwendeten, die während der Herstellung eingeführt oder anschließend bei der Formulierung der Überzugsmittel zugesetzt wurden. Besonders bevorzugt sind aliphatische Monoalkohole mit 2 bis 4 Kohlenstoffatomen.

Trotz des geringen Lösemittelanteils kann der Feststoffgehalt der erfindungsgemäßen Überzugsmittel sehr hoch sein. Beispielsweise sind klare, pigment- und füllstofffreie Zusammensetzungen bis zu 50 % Festkörperanteil erhältlich. Sie sind lagerstabil und können je nach Bedarf für die Applikation bevorzugt mit Wasser auf Applikationsviskosität verdünnt werden.

Darüber hinaus ergibt sich durch die geringe Säurezahl der eingesetzten Bindemittel der Vorteil eines geringen Bedarfs an Neutralisationsmittel (z.B. Amin), was wiederum eine geringere Inhibierung bei der Vernetzung mit Aminharzen, z.B. Melaminharz, durch den niedrigen im Film verbleibenden Aminanteil bewirkt.

Die erfindungsgemäßen Überzugsmittel können als Klarlacke sowie als pigment- bzw. füllstoffhaltige Lacke formuliert werden. Zur Formulierung werden übliche Hilfs- und Zusatzstoffe zugesetzt, wie beispielsweise Verlaufsmittel (z.B. Silikonöle), Entlüftungsmittel, Dispergierhilfen, Lichtschutzmittel, Antiabsetzmittel, Weichmacher und Stabilisatoren. Neben derartigen üblichen Lackzusatzstoffen können, falls keine Klarlacke formuliert werden, Pigmente und Füllstoffe zugesetzt werden. Es handelt sich dabei um die üblichen auf dem Lacksektor je nach Anwendungsgebiet verwendeten anorganischen und organischen Pigmente sowie Füllstoffe.

Beispiele für Pigmente sind farbgebende Pigmente, wie Titandioxid oder Ruß und Effektpigmente, wie Metallschuppenpigmente und/oder Perlglanzpigmente. Die erfindungsgemäß bereitgestellten Bindemittelzusammensetzungen, insbesondere solche auf der Basis von selbstemulgierbaren Copolymeren, eignen sich besonders günstig für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Beispiele für lacktübliche Füllstoffe sind Talkum und Silikate. Die Additive werden in üblichen, dem Fachmann geläufigen Mengen eingesetzt.

Die erfindungsgemäßen Überzugsmittel sind für Überzüge geeignet, die auf einer Vielzahl von Substraten haften, wie beispielsweise Holz, Textilien, Kunststoff, Glas, Keramik und insbesondere Metall.

Das erfindungsgemäße Überzugsmittel wird nach bekannten Verfahren, wie z.B. Spritzen, Tauchen, Rollen oder Rakeln appliziert. Dabei wird auf das gegebenenfalls schon mit weiteren Lackschichten versehene Substrat auf das Überzugsmittel aufgetragen. Nach einer Abdunstphase wird das applizierte Überzugsmittel durch Erwärmen vernetzt. Die Einbrenntemperaturen liegen z.B. bei 100 bis 180°C, bei Überzugsmitteln auf der Basis von selbstemulgierenden Copolymeren bevorzugt bei 110 bis 150°C, bei Überzugsmitteln auf der Basis von Polyesteroligomer-Polyacrylaten bevorzugt bei 130 bis 160°C. Die Schichtdicke des eingebrannten Films beträgt etwa 15 bis 50 µm. Dabei entsteht ein vernetzter, harter, glänzender sowie säurebeständiger Lacküberzug.

Überraschenderweise hat es sich gezeigt, daß bereits bei sehr geringen Schichtdicken von beispielsweise 20 µm optisch einwandfreie Oberflächen erzielt werden.

In manchen Fällen kann es günstig sein, den Einbrennvorgang katalytisch zu steuern. Zu diesem Zweck können übliche Härtungskatalysatoren zugesetzt werden. Es können handelsübliche Produkte eingesetzt werden, wie blockierte oder nicht-blockierte Sulfonsäuren und deren Derivate. Besonders günstig ist es, derartige Katalysatoren dem Überzugsmittel dann zuzusetzen, wenn als Vernetzer Melaminharz vom hochmethylolierten Typ eingesetzt werden, wie die Handelsprodukte Cymel 300 und 301.

Eine bevorzugte Ausführungsform ist die Applikation des erfindungsgemäßen Überzugsmittels als Klarlacküberzug auf einen wäßrigen oder nicht-wäßrigen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente, wie z.B. Metallic-Pigmente. Als Bindemittelbasis des Basislacks werden bevorzugt Polyester, Polyurethan- oder Acrylatharze eingesetzt.

Diese Bindemittel können gegebenenfalls über Vernetzer, z.B. Melamin- oder Isocyanatderivate, vernetzt werden.

Im Folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 50 bis 95 Gew.-% eines wäßrigen Epoxid-funktionalisierten Emulsionspolymerisats und 95 bis 5 Gew.-% einer anionischen Polyurethandispersion mit einer Säurezahl von 5 bis 10. Als Anreibeharz für in solchen Wasserbasislacken verwendete Pigmente und Additive eignen sich besonders Poly(meth)acrylatharze (beispielsweise in einer Menge bis zu 20 Gew.-%). Beispiele für solche Wasserbasislacke sind in der DE-OS 3 628 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formeldehyd) und einem Copolymer aus Polyethylen (85 Gew.-%) - Vinylacetat (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 397 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen sowie zusätzlich Gemische von in Lösemitteln gelösten Celluloseethern und/oder Celluloseestern und/oder Cellulosehalbestern. Solche Lacke sind z.B. in der DE-OS 29 24 632 beschrieben.

Sämtliche der vorstehenden Basislackformulierungen können übliche Lackadditive enthalten, sowie übliche Füllstoffe und farbgebende Pigmente sowie auch Metallicpigmente, wie Aluminium- bzw. Edelstahlbronzen und andere Effektpigmente.

Beispiele für Basislacke, die mit Klarlacken auf der Basis erfindungsgemäßer Überzugsmittel beschichtet werden

können, sind auch Pulver-Lacke, wie sie beispielsweise in "Products Finishing", April 1976, Seiten 54 bis 56 beschrieben sind.

Die in den erfindungsgemäßen Überzugsmitteln enthaltenen Bindemittel zeigen auch ein gutes Pigmentbenetzungsvermögen, so daß es auch möglich ist, die erfindungsgemäßen Überzugsmittel als farbige Einschichtdecklacke zu verwenden, die zu hochglänzenden Überzügen mit ausgezeichneter Glanzhaltung und guten mechanisch technologischen Eigenschaften führen.

Die erfindungsgemäßen Überzugsmittel können auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

Im Vergleich mit üblichen Basislacken ergeben erfindungsgemäße Basislacke Überzüge mit einer verbesserten Feucht-Warm-Beständigkeit, bedingt durch den besonders guten Vernetzungseffekt.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

Die erfindungsgemäßen Überzugsmittel eignen sich besonders für Decklacke oder Klarlacke und Basislacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z.B. für Haushaltsgeräte oder in der Möbelindustrie, um besonders säurestabile Überzüge zu erhalten.

Die erfindungsgemäßen wäßrigen Überzugsmittel zeichnen sich gegenüber den konventionellen, organischen Lösemittel enthaltenden Systemen besonders durch den geringen Gehalt an Lösemitteln bei gleichzeitig hohem Festkörper und niedriger Viskosität aus. Sie zeichnen sich dementsprechend durch eine besondere Umweltfreundlichkeit aus.

Überraschenderweise zeigen aus den erfindungsgemäßen Überzugsmitteln hergestellte Lackfilme ein gleich hohes Eigenschaftsniveau wie die bekannten lösemittelhaltigen Systeme. Eigenschaften, wie z.B. Oberflächenhärte, Klarheit, Glanz, Fülle, Verlauf, Kratzfestigkeit, Elastizität, Beständigkeit gegen Lösemittel, gegen Pflegemittel, gegen bestimmte Chemikalien, wie z.B. Bremsflüssigkeit, Diesel- und Ottokraftstoff und ganz besonders Säuren, wie z.B. Schwefelsäure. Kurz- und Langzeitbewitterungsbeständigkeit sind gleich wie bei den bekannten lösemittelhaltigen Systemen; sie sind zum Teil auch besser.

Zusammenfassend werden durch die Erfindung Überzugsmittel bereitgestellt, die aufgrund des geringen Lösemittelgehalts und des geringen Bedarfs an Neutralisationsmitteln besonders umweltverträglich sind. Durch den geringen Anteil an Neutralisationsmitteln, wie Aminen, erfolgt eine geringe Inhibierung der Vernetzung durch Melaminharze, wodurch sich eine gute mechanische und chemische Beständigkeit der erhaltenen Überzüge ergibt. Die Überzüge weisen eine gute Wetterbeständigkeit auf (sie entsprechen den neuesten Anforderungen die durch den KFA-Test bestimmt werden, es handelt sich dabei um den Kanten-Filter-Test A, der beschrieben wird in VDA-Prüfblatt-621-4,3 Punkt 2, Juli 1983).

Die Überzugsmittel weisen eine gute Lagerstabilität als Lack auf. Der Anteil organischer Lösemittel in den Bindemitteln ist gering, wodurch sich ein größerer Spielraum für Lösemittelkombinationen bei der Lackformulierung ergibt.

Darüber hinaus sind milde Lösemittel, wie Alkohole, z.B. Ethanol möglich.

Hierdurch wird eine gute Lösemittelabgabe (einschließlich Wasser) erzielt, wodurch eine rasche Antrocknung ermöglicht wird. Es resultiert eine gute Ablaufsicherheit. Durch den geringen Lösemittelanteil bei hohem Feststoffgehalt sowie die Verwendung von Wasser werden umweltverträgliche Systeme bereitgestellt.

In den folgenden Beispielen beziehen sich Teile (T) und % auf das Gewicht.

**Beispiel 1**

Herstellung eines Acrylblockcopolymeren

In einem 4 Liter-Dreihalskolben, der mit Rückflußkühler, Zulauftrichter und Rührer versehen ist, werden

| | |
|---|---|
| 540 T | Xylol |
| 60 T | Butanol |
| 435 T | Glycidylester der Versaticsäure (Handelsprodukt Cardura E-10 der Fa. Shell) |

vorgelegt und zum Sieden erhitzt (138 - 141°C). Innerhalb von 3 Stunden wurden nun

| | |
|---|---|
| 126 T | Acrylsäure |
| 120 T | Laurylacrylat-1214 |
| 120 T | Styrol |
| 252 T | Hydroxypropylmethacrylat |
| 348 T | Isobutylacrylat |
| 48 T | tert.-Butylperbenzoat |

kontinuierlich zudosiert, anschließend werden innerhalb von 2 Stunden

| | |
|---|---|
| 78 T | Acrylsäure |
| 330 T | Isobutylacrylat |
| 243 T | Butandiolmonoacrylat |
| 252 T | Isobutylmethacrylat |
| 48 T | tert.-Butylperbenzoat |

kontinuierlich zudosiert. Anschließend wird noch 4 Stunden am Rücklauf nachpolymerisiert. Das erhaltene Harz hat einen Festkörpergehalt von 80 % und eine Säurezahl von 26 mg KOH/g.

**Beispiel 2**

Herstellung einer Acrylatemulsion aus dem Acrylblockcopolymeren von Beispiel 1

In einem 2-Liter-Dreihalskolben, der mit Destillationsbrücke, Zulauftrichter, Thermometer und Rührer versehen ist, werden 515 T des in Beispiel 1 beschriebenen Acrylblockcopolymeren vorgelegt und auf 135°C erhitzt. Es wird Vakuum angelegt und Lösemittel abdestilliert (103 T). Anschließend wird auf 85°C gekühlt und mit Inertgas auf Normaldruck gebracht. Unter Rühren werden 16,8 T Dimethylethanolamin zugefügt und 5 Minuten gemischt. Danach werden unter Rühren in folgender Reihenfolge 22,4 T Polyesteroligomer (Beispiel 5), 32,0 T verkapptes Polyisocyanat (Butanoxim-verkapptes Isophorondiisocyanat-isocyanurat, Handelsprodukt T 1890, 70 %ig in Butylglykol, der Hüls AG), 204, 8 T hydrophobes Melaminharz (Handelsprodukt Setamin R US-138, 70 %ig in Butanol, der AKZO) und 25,6 T hydrophiles Melaminharz (Handelsprodukt Cymel R 327, 90 %ig in iso-Butanol, der Cyanamid) hinzugefügt. Nachdem etwa 5 min. bei 65 - 60°C gemischt wurde, werden 936,0 T vollentsalztes Wasser in 90 Minuten kontinuierlich zudosiert, wobei die Temperatur bei 60°C gehalten wird. Die erhaltene wäßrige Acrylatblockcopolymeremulsion hat einen Feststoffgehalt von 37,4 % und einen HS-Wert von 86,4 %.

**Beispiel 3**

Herstellung eines Acrylcopolymeren

In einem 2-Liter-Dreihalskolben, der mit Rückflußkühler, Zulauftrichter und Rührer versehen ist, werden

| | |
|---|---|
| 160 T | Xylol |
| 40 T | Butanol |
| 289 T | Glycidylester der Versaticsäure (Handelsprodukt Cardura R E 10 der Fa. Shell) |

vorgelegt und zum Sieden erhitzt (138 - 141°C).

Innerhalb von 5 Stunden werden anschließend

| | |
|---|---|
| 40 T | Laurylacrylat |
| 40 T | Styrol |
| 80 T | Isobutylacrylat |
| 81 T | Butandiolmonoacrylat |
| 109 T | Acrylsäure |
| 129 T | Isobutylmethacrylat |
| 32 T | tert.-Butylperbenzoat |

kontinuierlich zudosiert. Nach Zulaufende wird noch 4 Stunden am Rückfluß nachpolymerisiert. Das erhaltene Acrylcopolymere hat einen Festkörpergehalt von 80 % und eine Säurezahl von 27,1 mg KOH/g.

**Beispiel 4**

Herstellung einer Emulsion aus dem Acrylcopolymeren von Beispiel 3

In einem 2-Liter-Dreihalskolben, der mit Destillationsbrücke, Zulauftrichter, Thermometer und Rührer versehen ist, werden 421 T des Acrylcopolymeren von Beispiel 3 vorgelegt und auf 135°C erhitzt. Es wird Vakuum angelegt und Lösemittel abdestilliert (84 T). Anschließend wird auf 85°C gekühlt und mit Inertgas auf Normaldruck gebracht. Unter Rühren werden 14,1 T Dimethylethanolamin zugefügt und 5 Minuten gemischt. Danach werden unter Rühren in folgender Reihenfolge 42,0 T Polyesteroligomer (Beispiel 5), 176,6 T verkapptes Polyisocyanat (wie in Beispiel 2) und 127,0 T Melaminharz (wie in Beispiel 2) (Handelsprodukt Maprenal UMF 3615) 80 %ig in Butanol hinzugefügt. Nachdem etwa 5 min. bei 65 - 60°C gemischt wurde, werden 710,0 T vollentsalztes Wasser in 90 Minuten kontinuierlich zudosiert, wobei die Temperatur bei 60°C gehalten wird. Die entsprechende wäßrige Acrylatharzemulsion hat einen Feststoffgehalt von 42,9 % und einen HS-Wert von 86,7 %.

**Beispiel 5**

Herstellung eines Polyesteroligomeren

336,7 g Trimethylolpropan, 366,8 T Adipinsäure und 297 g Hexandiol werden mit 5 g untersphosphoriger Säure in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl kleiner 1,5 kondensiert.

Das so erhaltene Produkt hat einen Einbrennrückstand von 94,5 % (1 h, 150°C), eine Viskosität von 3200 mPa.s (100 %ig), eine Hydroxylzahl von 460 und eine Farbzahl von 30 Hazen).

Die in den Beispielen 2 und 4 erhaltenen Acrylatemulsionskonzentrate werden vor dem Verdünnen mit VE-Wasser auf Spritzviskosität mit üblichen, für wäßrige Systeme geeigneten Zusätzen wie Lichtschutzmitteln [0,7 T Lösung eines sterisch gehinderten Amins (Handelsprodukt Tinuvin 292) und 1,0 T eines Benztriazolderivates (Handelsprodukt Tinuvin 1139] und Additiven, Benzinen, Estern, Alkoholen, die verlaufs- und kocherbeeinflussend wirken, versehen.

Auf handelsüblichen Basislacken ließen sich bei einer Verarbeitungsviskosität von 30" $AK_4$, 20°C im üblichen Naß-in-naß-Verfahren in 2 bis 3 Spritzgängen Trockenfilme von 30 bis 45 pm applizieren.

Die erhaltenen Filme wurden nach der Applikation 6 Minuten abgelüftet (abgedunstet), 10 Minuten bei 80°C vorgeliert und zuletzt 20 Minuten bei 140°C eingebrannt. Sie besaßen dann eine ausgezeichnete Härte, einen sehr hohen Glanz und erfüllten industriell übliche Öl/Ruß-Tests (Opel-Spezifikation GME 60 403) ohne Veränderung der Oberfläche.

**Beispiel 6**

Herstellung von Polyesteroligomer-Polyacrylaten

717 g Polyesteroligomer aus Beispiel 5 werden mit 597 g Ethanol in einem Rührer, Rückflußkühler, Tropftrichter und Thermometer versehenen 4-Liter-Dreihalskolben auf 81°C bis zum Rückfluß erhitzt.

Anschließend wird in 4 Stunden eine Mischung aus 552 g Butandiolmonoacrylat, 996 g tert.-Butylacrylat, 74 g Acrylsäure und 50 g Vazo 67 (2,2-Azo-bis-2-Methylbutyronitril) zugetropft und anschließend 4 Stunden nachpolymerisiert.

Das Produkt hatte einen Einbrennrückstand von 79,8 % (1 h, 150°C) bei einer Viskosität von 7200 mPa.s (DIN 53015), eine Säurezahl von 26,3, eine OH-Zahl von 231 und eine Farbzahl von 60 Hazen.

**Beispiel 7**

Herstellung eines wasserverdünnbaren Klarlackes

309,8 g des in Beispiel 6 beschriebenen Polyesteroligomer-Polyacrylats, 24,3 g eines hochiminofunktionellen Melaminharzes, 112,4 g des Trimeren von Isophorondiisocyanat, verkappt mit Butanonoxim und 26,3 g Ethanol wurden unter einem Laborrührer gut vorgemischt und unter weiterem Rühren mit einem Gemisch aus 119,8 g Butoxyethanol, 10,6 g eines UV-Absorbers vom Benztrialzoltyp und 7,1 g eines Radikalfängers vom HALS-Typ versetzt und 3,1 g

eines handelsüblichen Verlaufsproduktes auf Silikonbasis. Danach wurde unter Rühren mit 13,9 g Dimethylethanolamin neutralisiert, weitere 15 Minuten gerührt und anschließend mit einem Gemisch aus 297,7 g vollentsalztem Wasser und 25 g Ethanol verdünnt. Der Lack hatte eine Viskosität von 27 Sekunden (gemessen im DIN-4-becher bei 20°C) und einen pH-Wert von 8,4. Der Lack wurde mit einem Drahtrakel auf eine Glasplatte aufgezogen, bei 80°C 15 Minuten vorgetrocknet und 20 Minuten bei 140°C eingebrannt. Der erhaltene Lackfilm war klar und hochglänzend und wies bei einer Schichtdicke von 40 pm eine Pendelhärte von 137 Sekunden, gemessen nach König, auf. Ein nach gleicher Art und einem blanken Eisenblech (Erichsen-Blech) hergestellter Lackfilm wies eine Tiefung nach Erichsen von 6,3 mm sowie eine hohe Beständigkeit gegen Schwefelsäure auf.

**Patentansprüche**

**1.** Wäßriges, hitzehärtbares Überzugsmittel, enthaltend

A) 38,5 bis 80 Gew.-% eines oder mehrerer filmbildender selbstemulgierender Copolymerer auf der Basis von Estern ungesättigter Carbonsäuren mit hydrophoben und hydrophilen Anteilen, in teilweise oder vollständig mit Basen neutralisierter Form, wobei

a) die hydrophoben Anteile auf sekundäre OH-Gruppen enthaltenden monomeren Estern ungesättigter Carbonsäuren basieren, die im Gemisch mit OH-Gruppen-freien Comonomeren vorliegen können, und

b) die hydrophilen Anteile auf monomeren Estern ungesättigter Carbonsäuren mit primären OH-Gruppen und monomeren Estern ungesättigter Carbonsäuren mit COOH-Gruppen basieren, die im Gemisch mit OH-Gruppen-freien Comonomeren vorliegen können,

wobei das Zahlenverhältnis von primären zu sekundären OH-Gruppen im Copolymeren 1 : 1,5 bis 1 : 2,5 beträgt, und das Copolymer eine Säurezahl von 15 bis 60, eine OH-Zahl von 60 bis 200 und ein Zahlenmittel der Molmasse (Mn) von 2000 bis 10000 aufweist,

B) 0 bis 25,5 Gew.-% eines oder mehrerer Polyesteroligomerer mit einem errechneten Molekulargewicht von 200 bis 1000, einer Hydroxylzahl von 280 bis 600 und einer Säurezahl von 0 bis 1,5,

C) 3,5 bis 40 Gew.-% eines oder mehrerer Aminharzvernetzer,

D) 0,5 bis 28 Gew.-% eines oder mehrerer verkappter Polyisocyanate,

wobei sich die Gewichtsprozente der Komponenten A) bis D) jeweils auf die Festkörpergewichte der Harze beziehen und auf 100 Gew.-% addieren,
sowie Wasser und gegebenenfalls ein oder mehrere organische Lösemittel, Pigmente, Füllstoffe und/oder lackübliche Hilfs- und Zusatzstoffe.

**2.** Überzugsmittel nach Anspruch 1, worin es sich bei den Aminharzvernetzern der Komponente C) um ein oder mehrere in Wasser lösliche und/oder durch Zusatz organischer Lösemittel in Wasser löslich gemachte Aminharzvernetzer handelt.

**3.** Überzugsmittel nach Anspruch 1, worin es sich bei den Aminharzvernetzern der Komponente C) um einen oder mehrere in Wasser unlösliche Aminharzvernetzer mit einem Anteil bis zu 4 Gew.-%, bezogen auf die Summe der Komponenten A), B), C) und D), eines oder mehrerer in Wasser löslicher Aminharzvernetzer handelt.

**4.** Überzugsmittel nach einem der Ansprüche 1 bis 3 in Form einer emulgatorfreien wäßrigen Emulsion, enthaltend

38,5 bis 80 Gew.-% eines oder mehrerer selbstemulgierender Copolymerer der Komponente A),

3,5 bis 25,5 Gew.-% eines oder mehrerer Polyesteroligomerer der Komponente B), sowie

C1) 3,5 bis 28 Gew.-% eines oder mehrerer in Wasser unlöslicher Aminharzvernetzer,

C2) 0 bis 4 Gew.-% eines oder mehrerer in Wasser löslicher Aminharzvernetzer und

0,5 bis 28 Gew.-% eines oder mehrerer verkappter Polyisocyanate der Komponente D).

5. Überzugsmittel nach einem der Ansprüche 1 bis 4, worin die verkappten Polyisocyanate teilweise oder vollständig aus Polyisocyanaten mit cycloaliphatischen Resten im Molekül bestehen.

6. Wäßriges Überzugsmittel nach einem der vorhergehenden Ansprüche, dadurch gekennzeichnet, daß es in Form eines Klarlacks ohne Pigmente und Füllstoffe vorliegt.

7. Verfahren zur Herstellung der Überzugsmittel nach einem der Ansprüche 4 bis 6, dadurch gekennzeichnet, daß man

38,5 bis 80 Gew.-% eines oder mehrerer selbstemulgierender Copolymerer, wie für Komponente A) in Anspruch 1 definiert, mit

3,5 bis 25,5 Gew.-% eines oder mehrerer Polyesteroligomerer, wie für Komponente B) in Anspruch 1 definiert, und mit

0,5 bis 28 Gew.-% verkapptem Polyisocyanat, wie für Komponente D) in Anspruch 1 definiert, vermischt, worauf das Copolymere durch Zusatz von Basen neutralisiert wird und in die erhaltene neutralisierte Mischung

3,5 bis 28 Gew.-% in Wasser unlöslicher Aminharzvernetzer und

0 bis 4 Gew.-% in Wasser löslicher Aminharzvernetzer zugemischt werden, worauf das erhaltene Gemisch in Wasser emulgiert wird.

8. Verwendung der Überzugsmittel nach einem der Ansprüche 1 bis 6 in pigmenthaltiger Form zur Herstellung von ein- oder mehrschichtigen Lackierungen.

9. Verwendung der Überzugsmittel nach einem der Ansprüche 1 bis 6 in pigmentfreier Form zur Herstellung von Klarlackschichten.

10. Verwendung der Überzugsmittel nach einem der Ansprüche 1 bis 6 zur Herstellung von Mehrschichtlackierungen auf dem Kraftfahrzeugsektor.

## Claims

1. Aqueous, heat curable coating composition containing

A) 38.5 to 80 wt.% of one or more film-forming, self-emulsifying copolymers based on esters of unsaturated carboxylic acids having hydrophobic and hydrophilic portions in a form partially or entirely neutralised with bases, wherein

a) the hydrophobic portions are based on monomeric esters of unsaturated carboxylic acids containing secondary OH groups, which may be present as a mixture with comonomers containing no OH groups and

b) the hydrophilic portions are based on monomeric esters of unsaturated carboxylic acids having primary OH groups and monomeric esters of unsaturated carboxylic acids having COOH groups, which may be present as a mixture with comonomers containing no OH groups,

wherein the numeric ratio of primary to secondary OH groups in the copolymer is 1:1.5 to 1:2.5, and the copolymer has an acid value of 15 to 60, an OH value of 60 to 200 and a number average molecular weight (Mn) of 2000 to 10000,

B) 0 to 25.5 wt.% of one or more polyester oligomers having a calculated molecular weight of 200 to 1000, a hydroxyl value of 280 to 600 and an acid value of 0 to 1.5,

C) 3.5 to 40 wt.% of one or more amino resin crosslinking agents,

D) 0.5 to 28 wt.% of one or more capped polyisocyanates,

wherein the weight percentages of components A) to D) in each case relate to the weight of resin solids and add up to 100 wt.%,
together with water and optionally one or more organic solvents, pigments, extenders and/or conventional lacquer auxiliary substances and additives.

2. Coating composition according to claim 1, in which the component C) amino resin crosslinking agents comprise one or more amino resin crosslinking agents soluble in water and/or rendered soluble in water by addition of organic solvents.

3. Coating composition according to claim 1, in which the component C) amino resin crosslinking agents comprise one or more amino resin crosslinking agents insoluble in water with a proportion of up to 4 wt.%, relative to the sum of components A), B), C) and D) of one or more amino resin crosslinking agents soluble in water.

4. Coating composition according to one of claims 1 to 3 in the form of an emulsifier-free aqueous emulsion containing

38.5 to 80 wt.% of one or more self-emulsifying component A) copolymers,

3.5 to 25.5 wt.% of one or more component B) polyester oligomers, as well as

C1) 3.5 to 28 wt.% of one or more amino resin crosslinking agents insoluble in water,

C2) 0 to 4 wt.% of one or more amino resin crosslinking agents soluble in water and

0.5 to 28 wt.% of one or more component D) capped polyisocyanates.

5. Coating composition according to one of claims 1 to 4, in which the capped polyisocyanates partially or entirely consist of polyisocyanates having cycloaliphatic residues in the molecule.

6. Aqueous coating composition according to one of the preceding claims, characterised in that it is in the form of a clear lacquer without pigments and extenders.

7. Process for the production of the coating compositions according to one of claims 4 to 6, characterised in that

38.5 to 80 wt.% of one or more self-emulsifying copolymers, as defined for component A) in claim 1, are mixed with

3.5 to 25.5 wt.% of one or more polyester oligomers, as defined for component B) in claim 1, and with

0.5 to 28 wt.% of capped polyisocyanate, as defined for component D) in claim 1, whereupon the copolymer is neutralised by addition of bases and

3.5 to 28 wt.% of amino resin crosslinking agents insoluble in water and

0 to 4 wt.% of amino resin crosslinking agents soluble in water are mixed into the resultant neutralised mixture, wherein the resultant mixture is emulsified in water.

8. Use of the coating compositions according to one of claims 1 to 6 in pigmented form for the production of single or multi-layer lacquer coatings.

9. Use of the coating compositions according to one of claims 1 to 6 in pigment-free form for the production of clear lacquer layers.

10. Use of the coating compositions according to one of claims 1 to 6 for the production of multi-layer lacquer coatings in the automotive sector.

**Revendications**

1. Composition de revêtement aqueuse, durcissable à la chaleur, contenant :

   A) de 38,5 à 80 % en poids d'un ou plusieurs copolymères feuillogènes autoémulsifiants, à base d'esters d'acides carboxyliques insaturés comportant des fragments hydrophobes et hydrophiles, sous une forme partiellement ou complètement neutralisée par des bases, où

   a) les fragments hydrophobes se fondent sur des esters monomères, contenant des groupes OH secondaires, d'acides carboxyliques insaturés, qui peuvent se présenter en mélange avec des comonomères exempts de groupes OH, et
   b) les fragments hydrophiles se fondent sur des esters monomères d'acides carboxyliques insaturés comportant des groupes OH primaires et sur des esters monomères d'acides carboxyliques insaturés comportant des groupes COOH, qui peuvent se présenter en mélange avec des comonomères exempts de groupes OH,

   le rapport en nombre entre les groupes OH primaires et les groupes OH secondaires dans le copolymère étant de 1:1,5 à 1:2,5, et le copolymère ayant un indice d'acide de 15 à 60, un indice d'hydroxyle de 60 à 200 et une masse molécu-laire moyenne en nombre (Mn) de 2000 à 10 000,
   B) de 0 à 25,5 % en poids d'un ou plusieurs polyesters oligomères, ayant une masse moléculaire calculée de 200 à 1000, un indice d'hydroxyle de 280 à 600 et un indice d'acide de 0 à 1,5,
   C) de 3,5 à 40 % en poids d'un ou plusieurs agents de réticulation à base d'une résine d'amine,
   D) de 0,5 à 28 % en poids d'un ou plusieurs polyisocyanates coiffés en bout,

   où les pourcentages en poids des composants A) à D) sont chacun rapportés à l'extrait sec des résines, leur somme étant de 100 % en poids,
   ainsi que de l'eau, et éventuellement un ou plusieurs solvants, pigments, matières de charge et/ou adjuvants et additifs usuels dans la technique des peintures et vernis.

2. Composition de revêtement selon la revendication 1, dans laquelle, pour ce qui concerne les agents de réticulation à base d'une résine d'amine du composant C), il s'agit d'un ou plusieurs agents de réticulation à base d'une résine d'amine, solubles dans l'eau, ou rendus solubles dans l'eau par addition de solvants organiques.

3. Composition de revêtement selon la revendication 1, dans laquelle, pour ce qui concerne les agents de réticulation à base d'une résine d'amine du composant C), il s'agit d'un ou plusieurs agents de réticulation à base d'une résine d'amine insolubles dans l'eau, contenant jusqu'à 4 % en poids, par rapport à la somme des composants A), B), C) et D), d'un ou plusieurs agents de réticulation à base d'une résine d'amine, solubles dans l'eau.

4. Composition de revêtement selon l'une des revendications 1 à 3, sous forme d'une émulsion aqueuse sans émulsifiant, contenant :

   de 38,5 à 80 % en poids d'un ou plusieurs copolymères auto-émulsifiables du composant A),
   de 3,5 à 25,5 % en poids d'un ou plusieurs polyesters oligomères du composant B), et
   C1) de 3,5 à 28 % en poids d'un ou plusieurs agents de réticulation insolubles dans l'eau à base d'une résine d'amine,
   C2) de 0 à 4 % en poids d'un agent de réticulation soluble dans l'eau à base d'une résine d'amine, et
   de 0,5 à 28 % en poids d'un ou plusieurs polyisocyanates coiffés en bout du composant D).

5. Composition de revêtement selon l'une des revendications 1 à 4, dans laquelle les polyisocyanates coiffés en bout sont en partie ou en totalité constitués de polyisocyanates comportant des radicaux cycloaliphatiques dans leur molécule.

6. Composition de revêtement aqueuse selon l'une des revendications précédentes, caractérisée en ce qu'elle se présente sous forme d'un vernis transparent sans pigments ni charges.

7. Procédé de fabrication des compositions de revêtement selon l'une des revendications 4 à 6, caractérisé en ce qu'on mélange

38,5 à 80 % en poids d'un ou plusieurs copolymères auto-émulsifiables tels que définis pour le composant A) dans la revendication 1, à
3,5 à 25,5 % en poids d'un ou plusieurs polyesters oligomères tels que définis pour le composant B) dans la revendication 1, et à
0,5 à 28 % en poids d'un polyisocyanate coiffé en bout, tel que défini pour le composant D) dans la revendication 1,

puis on neutralise le copolymère par addition de bases et on mélange au mélange neutralisé ainsi obtenu

de 3,5 à 28 % en poids d'agents de réticulation insolubles dans l'eau à base d'une résine d'amine, et
de 0 à 4 % en poids d'agents de réticulation solubles dans l'eau à base d'une résine d'amine,

ce après quoi on émulsifie dans l'eau le mélange obtenu.

**8.** Utilisation des compositions de revêtement selon l'une des revendications 1 à 6, sous une forme contenant des pigments, pour préparer des systèmes de peinture monocouches ou multicouches.

**9.** Utilisation des compositions de revêtement selon l'une des revendications 1 à 6, sous une forme sans pigment pour préparer des couches de vernis transparent.

**10.** Utilisation des compositions de revêtement selon l'une des revendications 1 à 6 pour préparer des systèmes de peintures multicouches dans le domaine de la construction automobile.